(19) Europäisches Patentamt
European Patent Office
Office européen des brevets

(11) **EP 2 541 499 A2**

(12) **EUROPEAN PATENT APPLICATION**

(43) Date of publication:
**02.01.2013 Bulletin 2013/01**

(51) Int Cl.:
**G06T 7/00** *(2006.01)*     **H04N 13/04** *(2006.01)*

(21) Application number: **11190627.7**

(22) Date of filing: **24.11.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.06.2011 TW 100123007**

(71) Applicant: **Acer Incorporated**
**Taipei Hsien 221 (TW)**

(72) Inventor: **Ko, Chueh-Pin**
**221 Taipei (TW)**

(74) Representative: **Michalski Hüttermann & Partner**
**Neuer Zollhof 2**
**40221 Düsseldorf (DE)**

(54) **Stereoscopic image display apparatus and method thereof**

(57)     A stereoscopic image display apparatus is provided. The stereoscopic image display apparatus has a common state generator, a display panel and an active light control layer. The common state generator is arranged for receiving stereoscopic information and generating a left-eye image, a right-eye image, a common sub-image and a corresponding state signal, wherein the common sub-image is a common part of the left-eye image and the right-eye image. The display panel is arranged for displaying the left-eye image, the right-eye image and the common sub-image according to a predetermined display order. The active light control layer is at a first state, a second state, and a third state, respectively, according to the state signal when the display panel displays the left-eye image, the right-eye image, and the common sub-image, respectively.

FIG. 2A

## Description

## CROSS REFERENCE TO RELATED APPLICATIONS

This Application claims priority of Taiwan Patent Application No. 100123007, filed on June 30, 2011, the entirety of which is incorporated by reference herein.

## BACKGROUND OF THE INVENTION

### Field of the Invention

The present invention relates to stereoscopic image display technologies, and in particular relates to a stereoscopic image display apparatus and method using a common state.

### Description of the Related Art

The three-dimensional (3D) vision is generated due to slight differences of the human eyes when observing an object, which is regarded as "parallax". That is, the human brain reads the parallax from the eyes to distinguish the distance of the object, thereby generating stereoscopic vision. Various stereoscopic display technologies have been developed based on the concept, where these technologies can be classified into two types: with glasses or naked eyes. When a user needs to wear a pair of specific glasses to watch three-dimensional stereoscopic films, the glasses can be classified as an active type or a passive type based on its operating mode.

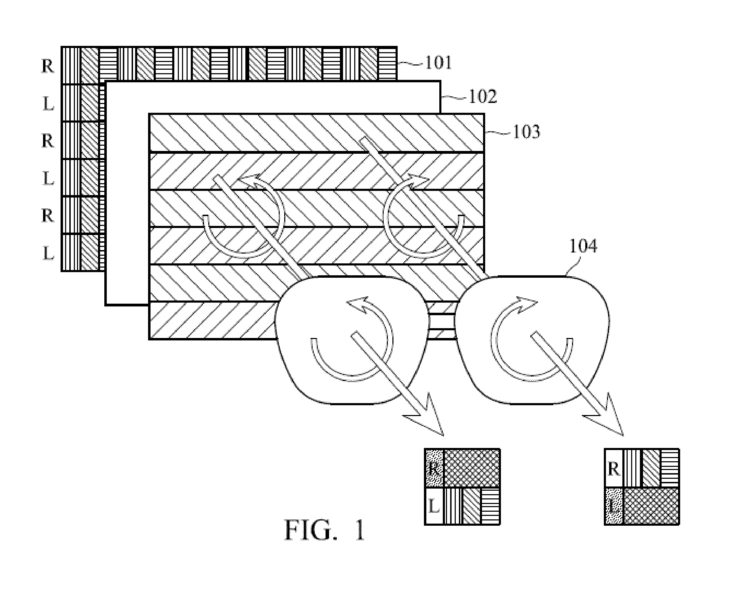

The passive stereoscopic glasses can also be classified as anaglyph stereoscopic glasses or passive polarization stereoscopic glasses. There is a polarization sheet on the left eyeglass lens and the right eyeglass lens of the passive polarization stereoscopic glasses to filter the light moving toward different directions. Thereby, the light moving with the same direction of the polarization sheet can pass through by blocking the light perpendicular to the polarization sheet. A corresponding polarization stereoscopic display apparatus is also required when using passive polarization stereoscopic glasses. The polarization stereoscopic image display apparatus, such as an LCD, is capable of using a two liquid crystal panel to display vertical and horizontal polarized images. However, there may be a higher cost with this apparatus. Generally, horizontal polarization sheets and vertical polarization sheets are placed in odd lines and even lines, respectively, in an interleaved fashion, where horizontal and vertical polarization sheets respectively use pixels of a half image with patterned retarders for performing phase delay, thereby polarizing the odd lines and even lines respectively to generate stereoscopic vision. Costs are lower with polarization sheets and patterned retarders. However, the resolutions (horizontal resolution or vertical resolution) observed by the left eye or the right eye are halved, as illustrated in FIG. 1, wherein an active polarizer 102 and a patterned retarder 103 are placed in front of the liquid display panel 101. The left eyeglass lens of the polarization stereoscopic glasses 104 receives a left-eye image with only even lines with counterclockwise circular polarization, and the right eyeglass lens of the polarization stereoscopic glasses 104 receives a right-eye image with only odd lines with clockwise circular polarization.

The stereoscopic television system with active shutter glasses can be applied to plasma TV, LCD, or DLP back projection TV, which requires corresponding shutter glasses to synchronize with the displayed TV signals, thereby viewing corresponding stereoscopic images correctly. However, shutter glasses cost more. When watching stereoscopic films with an active polarized stereoscopic TV, each frame has full resolution for both the left eye and the right eye. However, the left-eye image and the right-eye image are displayed alternately, and thus the frame rate of the left/right eye is only half of the original frame rate, thereby causing flickers in response to switching of the shutter glasses.

Conventional stereoscopic image processing technologies regard a stereoscopic image as an independent left-eye/right-eye image signal, and display the stereoscopic image as an independent left-eye/right-eye image to achieve stereoscopic vision. This way may be simple; however, and it will cause flickers by the shutter glasses or reduced resolution observed by the polarization glasses. This is because all design concepts of prior technologies are based on two conditions: the left-eye image and the right-eye image.

## BRIEF SUMMARY OF THE INVENTION

A detailed description is given in the following embodiments with reference to the accompanying drawings.

In an exemplary embodiment, a stereoscopic image display apparatus is provided. The stereoscopic image display apparatus has a common state generator, a display panel and an active light control layer. The common state generator is arranged for receiving stereoscopic information and generating a left-eye image, a right-eye image, a common sub-image and a corresponding state signal, wherein the common sub-image is a common part of the left-eye image and the right-eye image. The display panel is arranged for displaying the left-eye image, the right-eye image and the common sub-image according to a predetermined display order. The active light control layer is at a first state, a second state, and a third state, respectively, according to the state signal when the display panel displays the left-eye image, the right-eye image, and the common sub-image, respectively.

In another exemplary embodiment, a stereoscopic image display method is provided. The method comprises the following steps of: receiving stereoscopic information, and generating a left-eye image, a right-eye image and a common sub-image according to the stereoscopic information, wherein the left-eye image, the right-eye image and the common sub-image have corresponding state signals indicating a first state, a second state and a third state, and the common sub-image is a common part of the left-eye image and the right-eye image; displaying the left-eye image, the right-eye image, and the common sub-image on a display panel of a stereoscopic image display apparatus according to a predetermined display order; and adjusting an active light control layer in the stereoscopic image display apparatus according to the state signal

## BRIEF DESCRIPTION OF THE DRAWINGS

The present invention can be more fully understood by reading the subsequent detailed description and examples with references made to the accompanying drawings, wherein:

FIG. 1 illustrates a diagram of a conventional stereoscopic liquid crystal display apparatus and polarization glasses.

FIG. 2A illustrates a diagram of the common state generator according to an embodiment of the invention.

FIG. 2B and 2C illustrate a diagram of the common state generator for determining the state for different image sources according to an embodiment of the invention.

FIG. 3A and 3C illustrate a diagram of the common state generator for calculating identical images according to an embodiment of the invention.

FIG. 3C and 3D illustrate a diagram of the common state generator for calculating whether continuous images are identical images according to another embodiment of the invention.

FIG. 3E, 3F, 3G, and 3H illustrate a diagram of using different blocks to represent the common state according to an embodiment of the invention.

FIG. 4 illustrates a flow chart of the common state generator for applying different image profiles for different images according to an embodiment of the invention.

FIG. 5 illustrates a block diagram of the stereoscopic image display apparatus according to an embodiment of the invention.

FIG. 6A and 6B illustrate a diagram of the predetermined display order of the stereoscopic image display apparatus with a pair of shutter glasses according to an embodiment of the invention.

FIG. 6C illustrates a diagram of the predetermined display order of the stereoscopic image display apparatus with a pair of polarization glasses according to another embodiment of the invention

FIG. 6D illustrates a diagram of the predetermined display order of the naked-eye stereoscopic image display apparatus according to an embodiment of the invention.

FIG. 7A illustrates a diagram of the active polarizer of the stereoscopic image display apparatus with a pair of polarization glasses according to an embodiment of the invention.

FIG. 7B illustrates a diagram of the relationship between the voltage and the polarization angle of the active polarizer according to an embodiment of the invention.

FIG. 7C illustrates a chart of the relationship between the voltage and the polarization angle of the active polarizer for different states according to another embodiment of the invention.

FIG. 8 illustrates a diagram of the predetermined display order with the corresponding state control signal and timing according to an embodiment of the invention.

FIG. 9 illustrates a comparison chart of the transition time of the LCD panel according to an embodiment of the invention.

FIG. 10A illustrates a block diagram of the state delay unit according to an embodiment of the invention.

FIG. 10B illustrates a flow chart of the state delay unit according to an embodiment of the invention.

FIG. 11 illustrates a flow chart of the stereoscopic image display method according to an embodiment of the invention.

## DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

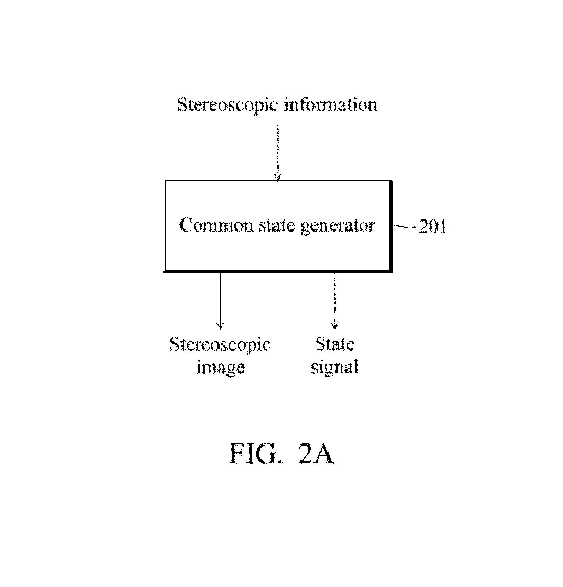

Conventional three-dimensional stereoscopic technologies merely define the left-eye image and the right-eye image. However, there are slight differences of the left-eye image and the right-eye image when an object is observed by human eyes. In other words, some objects look identical in the left-eye image and the right-eye image. A concept of "common sub-image" is provided in the invention and existing active/passive polarization stereoscopic image display apparatuses can be improved based on the concept. FIG. 2A illustrates a block diagram of the common state generator 201 according to an embodiment of the invention, wherein the stereoscopic image information can be any source with stereoscopic information, such as three-dimensional films (e.g. 2D images and corresponding depth images) processed from the two-dimensional films, three-dimensional films (i.e. already with left-eye images and right-eye images) captured by a three-dimensional stereoscopic camera, files with three-dimensional information in MVC format of the Blu-ray format, or sources of two-dimensional images with corresponding depth information to display three-dimensional information. The output stereoscopic image generated by the common state generator 201 comprises a left-eye image, a right-eye image and a common sub-image. The state signal may indicate state 1, state 2 and state 3, wherein the states 1~3 define the left-eye image, the right-eye image, and the common sub-image, respectively. The common part in both the left-eye image and the right-eye image is regarded as a common sub-image to be displayed in both two eyes simultaneously. The quality, brightness and the resolution of the stereoscopic images can be improved by the common sub-image, and the fatigue of the audience caused by flickers of the stereoscopic images can also be avoided.

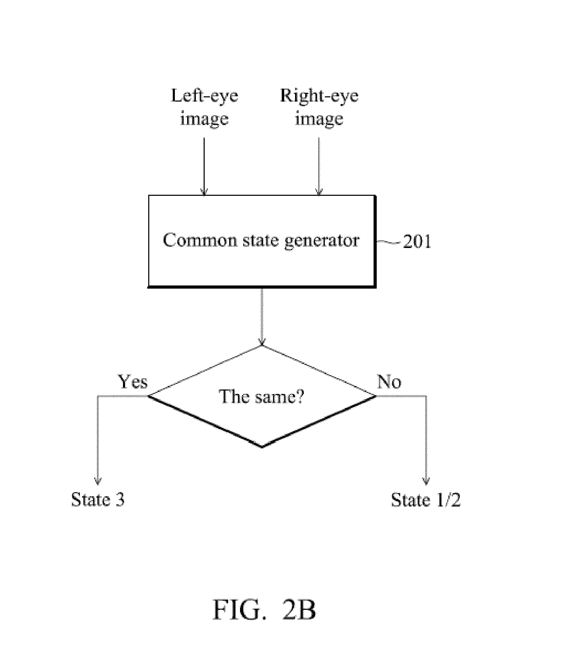

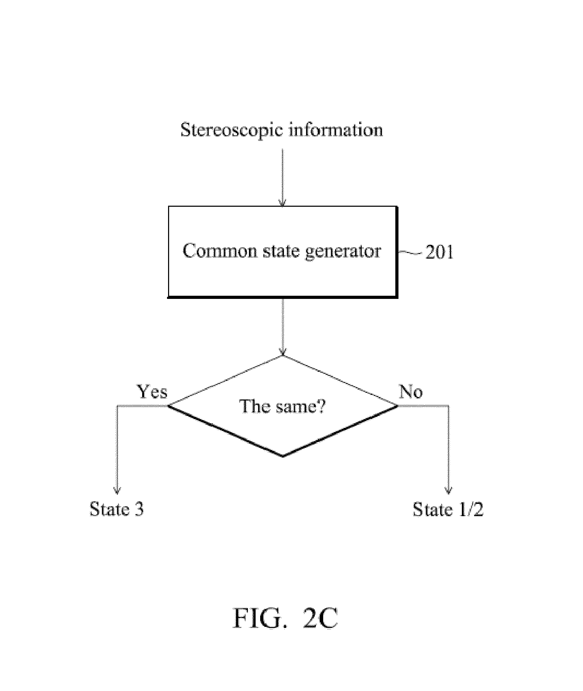

When the stereoscopic image information passes through the common state generator 201, the stereoscopic image comprising a left-eye image, a right-eye image or a common sub-image, is obtained as well as the corresponding state signal. FIGs. 2B and 2C illustrate a diagram of the common state generator 201 according to an embodiment of the invention. As illustrated in FIG. 2B, if the stereoscopic image information received by the common state generator 201 is the left-eye image and the right-eye image captured by a three-dimensional stereoscopic camera, and the common state generator will determine whether the left-eye image is identical to the right-eye image. If so, the output state signal indicates state 3. Otherwise, the output state signal indicates state 1 (i.e. left-eye image) or state 2 (i.e. right-eye image). As illustrated in FIG. 2C, if the stereoscopic image information received by the common state generator 201 is a multi-view information or two-dimensional images with corresponding depth information, and the common state generator 201 will determine whether the generated left-eye image is identical to the generated right-eye image. If so, the output state signal indicates state 3. Otherwise, the output state signal indicates state 1 (i.e. for the left-eye image) or state 2 (i.e. for the right-eye image). In an embodiment, and the common state generator 201 can be software executed by a personal computer, a scalar in a display, a timing controller (i.e. T-CON) in a display panel, or firmware of a display unit, but the invention is not limited thereto. The stereoscopic image generated by the common state generator 201 can be the received stereoscopic image bypassed, or the stereoscopic image generated by conventional stereoscopic image conversion technologies.

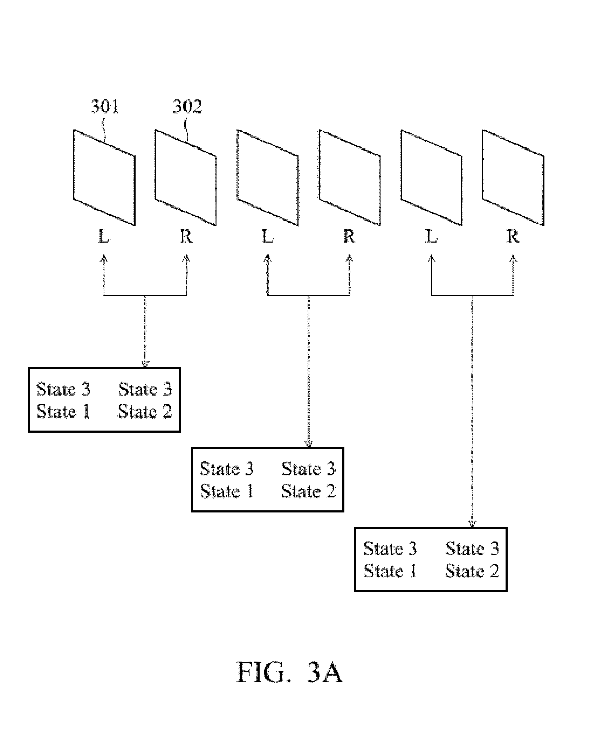

The common state generator 201 can perform individual image processing to different stereoscopic image sources, but the common state generator 201 is designed to find the common part of the left-eye image (i.e. state 1) and the right-eye image (i.e. state 2). FIGs 3A~3D illustrate a diagram of the algorithm of the common state generator 201 according to an embodiment of the invention. In an embodiment, as illustrated in FIG. 3A, the common state generator 201 is capable of calculating whether the left-eye image is close to the right-eye image. For example, under the conditions: a) the absolute value of the difference of the luminance of pixels in the left-eye image 301 and the right-eye image 302 is less than 10;

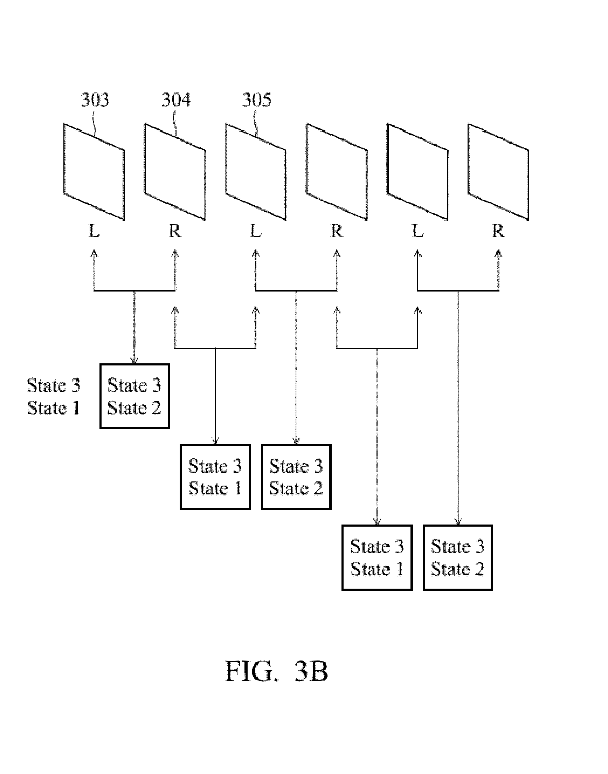

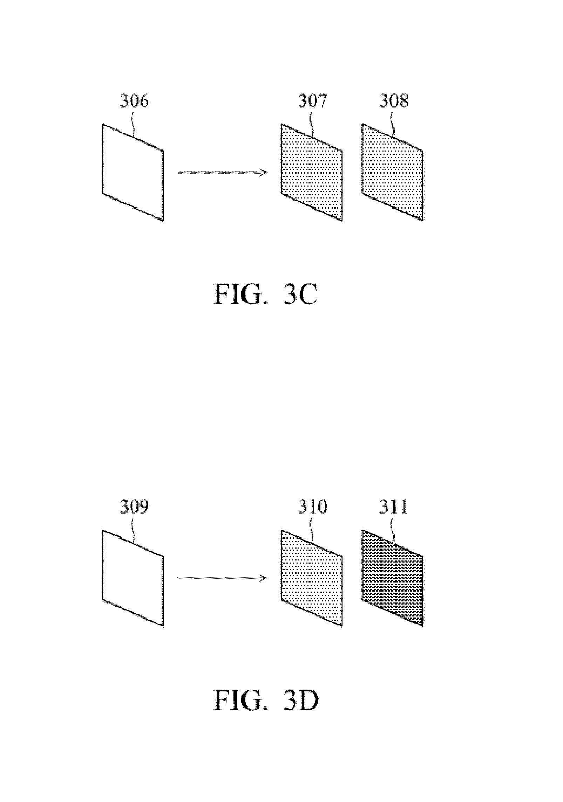

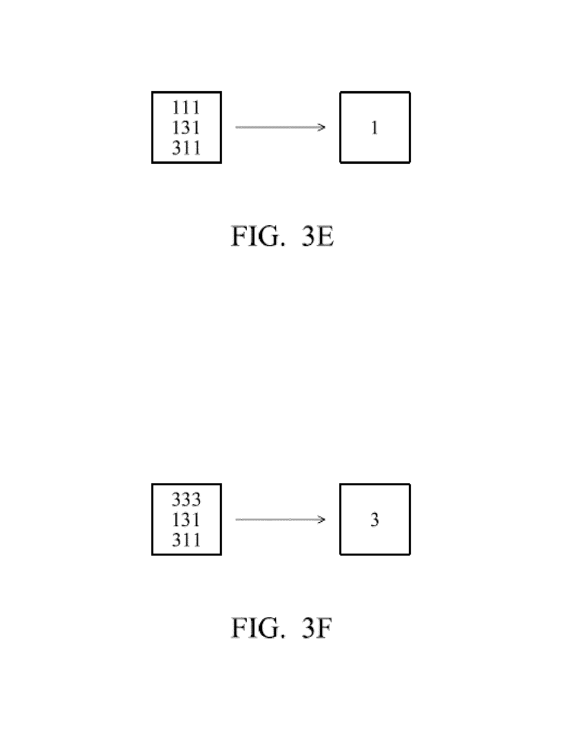

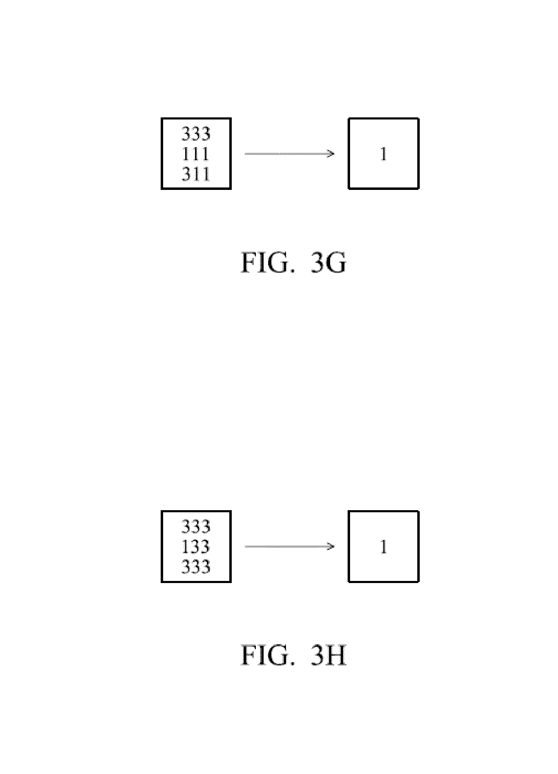

b) the luminance of pixels in the left-eye image and the right-eye image is less than 5; or c) the color difference (i.e. DeltaE) in pixels of the left-eye image and the right-eye image is less than 1, the common state generator 201 will determine that there are pixels of state 3 in the stereoscopic image pair comprising the left-eye image 301 and the right-eye image 302, wherein the calculated values in conditions a) to c) can be regarded as feature values of the left-eye image 301 and the right-eye 302. In another embodiment, as illustrated in FIG. 3B, the common state generator 201 is further capable of calculating whether each two continuous images (i.e. an adjacent left-eye image and right-eye image) are close to each other, such as the left-eye image 303 and the right-eye image 304, or the right-eye image 304 and the left-eye image 305. For example, under the conditions: d) the absolute value of the difference of the luminance of pixels in the prior image and the later image 302 is less than 10; e) the luminance of pixels in the prior image and the later image is less than 5; or f) the color difference (i.e. DeltaE) in pixels of the prior image and the later image is less than 1, and the common state generator 201 will determine that there are pixels of state 3 in the stereoscopic image pair comprising the prior image and the later image, wherein the calculated values in conditions d) to f) can be regarded as feature values of the left-eye image 301 and the right-eye 302. In yet another embodiment, the common state generator 201 is further capable of calculating the variance of luminance in several continuous images to determine whether there is a common sub-image of state 3 in the continuous images. As illustrated in FIG. 3C, the variance of luminance in the image 307 and 308 is 6, and the common state generator 201 can determine whether the summation of the variances of luminance in the three continuous images is less than a predetermined value (e.g. 10) to determine whether the pixel in the image 306 is at state 3. As illustrated in FIG. 3D, the variance of the luminance values of pixels of the image 309 and 310 is 6, and the variance of the luminance values of pixels of the image 310 and 311 is 6. The common state generator 201 may determine whether the pixel in the image 309 is a state 1 image, as well as determine whether the summation of the variances of three continuous images is larger than a predetermined value (e.g. 10). The common sub-image with state 3 can be retrieved according to the aforementioned method, wherein the condition of each pixel can be replaced by a condition of each block. That is, each block has a plurality of pixels, and the condition of each block can be substituted with a presentation value. For example, the condition of the block can be mainly with the majority of pixels, as illustrated in FIG 3E and 3F. Also, the condition of the block can mainly follow the condition of the center of the block, as illustrated in FIG. 3G. Alternatively, the condition of the block is 1 when any condition value of the block is 1, as illustrated in FIG. 3H. In summary, there are only pixels or blocks with state 3 in the common sub-image.

The stereoscopic image information received by the common state generator 201 can be two-dimensional images with corresponding depth information or the MVC format for three-dimensional content of a Blu-ray disc, wherein the two-dimensional images and the corresponding depth information can be generated by a depth camera. In this embodiment, the two-dimensional images and the corresponding depth information (or the MVC format) can be converted into stereoscopic images based on left-eye images and right-eye images, and the generated stereoscopic information can be calculated by a specific algorithm (i.e. introduced later) to obtain the corresponding state information. In another embodiment, the common state generator 201 can define the regions with a specific depth value as state 3. For example, the objects observed by the left-eye and the right eye in a specific depth from the screen almost have no differences, and thus the regions in a specific depth value or within a specific depth range can be defined as state 3, and the remaining regions can be defined as state 1 or state 2 based on the left-eye image or the right-eye image. For example, if luminance values 0 to 255 are used to represent different depths in a depth image, the specific depth range for state 3 can be defined as luminance 0 to 10, 120 to 135, or 233 to 255, and the remaining luminance pixels can be defined as state 1 or state 2 based on the left-eye image or the right-eye image.

The aforementioned embodiment describes all of the left-eye image or the right-eye image at state 3. In yet another embodiment, the common state generator 201 can further calculate the intersection (i.e. the common part) between the left-eye image and the right-eye image; namely, a common sub-image. The expanded stereoscopic image can be represented by the following formula:

Frame{L,R}→Frame{L*,S, R*}

& property(Frame)=StateX, wherein X=1~3;

wherein the left-eye image corresponds to state 1; the right-eye image corresponds to state 2; and the common sub-image corresponds to state 3. It should be noted that the common state generator 201 is further capable of outputting the corresponding state signal of each image to control the panel and the active light control layer in a stereoscopic display. In an embodiment, taking the left-eye image for example, the image L* can be a pure left-eye image, the generated left-eye image, or the optimized left-eye image, wherein the generated left-eye image is the left-eye image after stereoscopic image processing, and the "pure left-eye image" represents the sub-image of objects merely appearing in the left-eye image, and the optimized left-eye image represents the left-eye image enhanced by image processing for different scenes to obtain better visual effects. The common sub-image can be represented by the following formula:

$$ S = ( L * \bigcap R*) ; $$

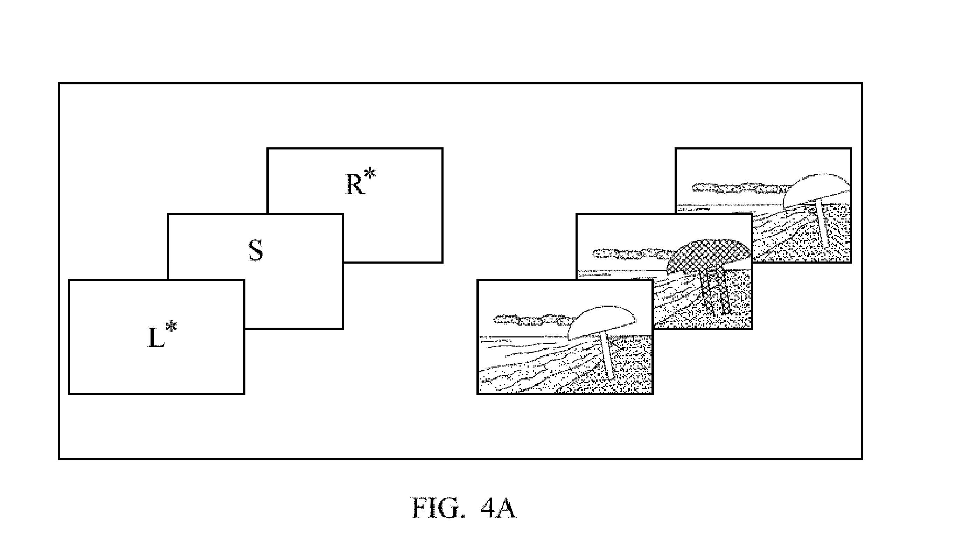

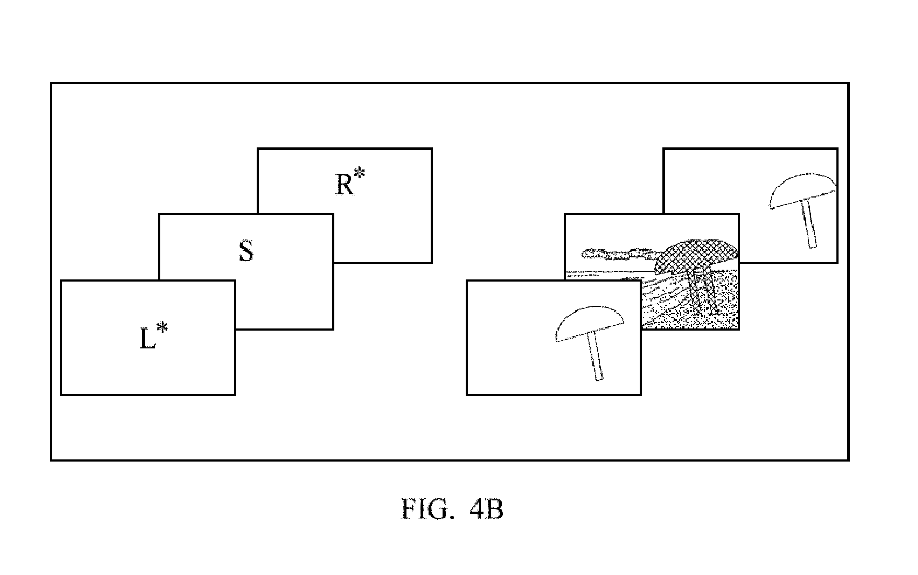

wherein S represents the common sub-image; L* can be a pure left-eye image, a generated left-eye image or the optimized left-eye image; and R* can be a pure right-eye image, a generated right-eye image or the optimized right-eye image. The images L* and R* should be paired. For example, when the image L* is an optimized left-eye image, the image R* should be the optimized right-eye image. For the remaining regions other than the intersection region between the images L* and R* (i.e. the regions other than the common sub-image) compensation can be by a black screen, a white screen or other images which can improved image quality, such as the optimized left-eye/right-eye image or the image including a specific ratio of the common sub-image (i.e. the ratio of the common sub-image is less than 50% in the image). As illustrated in FIG 4A and 4B, there are different ways to calculate the image L*, the image R* and the corresponding common sub-image S in the invention, wherein the images L* and R* in FIG. 4A are the generated left-eye image and the generated right-eye image, respectively. The images L* and R* in FIG. 4B are the pure left-eye image and the pure right-eye image, respectively.

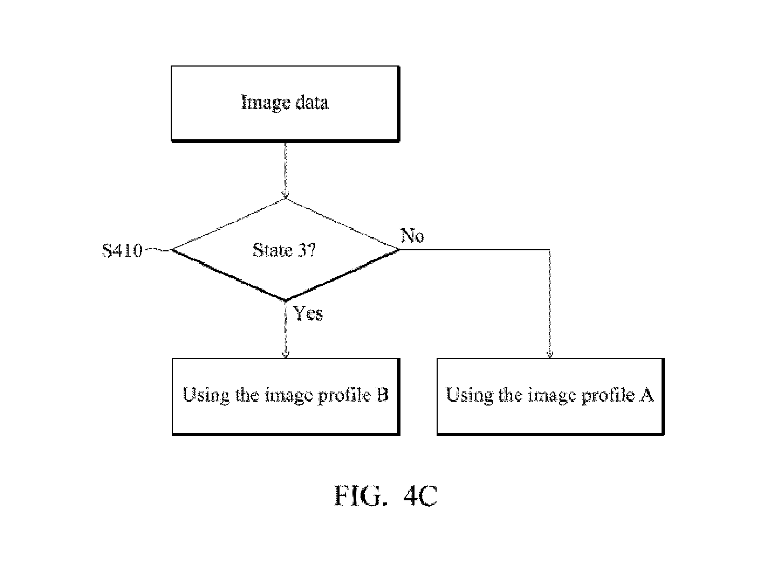

In another embodiment, the left-eye image, the right-eye image and the common sub-image with states 1~3 can be adjusted, respectively. For example, the common state generator 201 may use an image profile A to increase the contrast and saturation of state 1 and 2, as well as decrease the overall brightness. The common state generator 201 may use an image profile B to increase the brightness of state 3, and reference can be made to FIG. 4C for the procedure. In step S410, the common state generator 201 determines whether the image is at state 3. If so, the image profile B is used. Otherwise, the image profile A is used. That is, the detection results of different states of the images can be used to apply corresponding image profiles to the images, respectively, to alternate the pixel values in the left-eye image, the right-eye image and the common sub-image by image processing, wherein the image processing in the image profile A and B includes adjusting at least one of the brightness, contrast, gamma, saturation, and the skin color of the corresponding regions in the left-eye image, the right-eye image and the common sub-image with state 1~3, but the invention is not limited thereto.

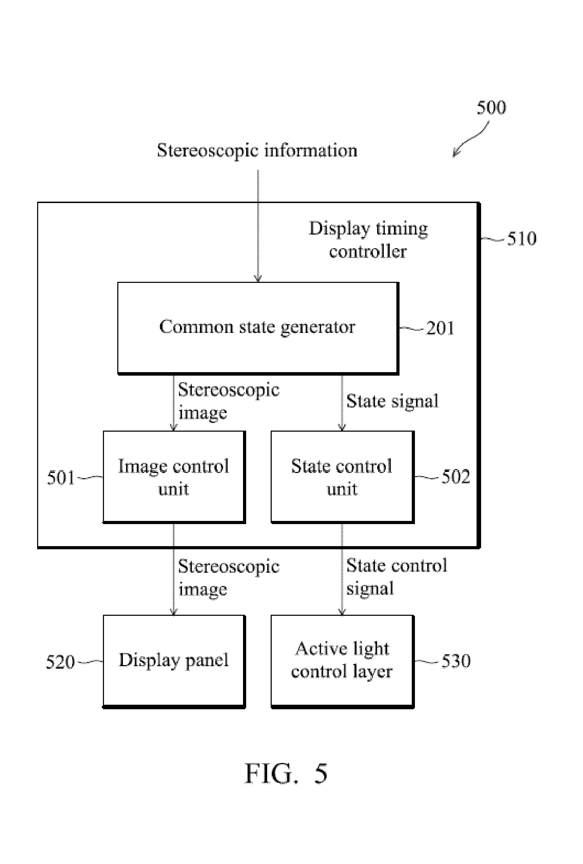

FIG. 5 illustrates a block diagram of the stereoscopic image display apparatus 500 according to an embodiment of the invention. The stereoscopic image display apparatus 500 may comprise a common state generator 201, an image control unit 501, a state control unit 502, a display panel 520, and an active light control layer 530. When the common state generator 201 calculates each left-eye image, right-eye image and common sub-image, the stereoscopic image can be outputted. The common state generator 201 may further control the display order of the left-eye image, the right-eye image and the common sub-image, and output the generated stereoscopic image to the display panel 520. In addition, the common state generator 201 may further control some components (e.g. the active light control layer 530) to perform corresponding control of the stereoscopic image in different states, wherein detailed description thereof is in the following section. In an embodiment, the display timing controller 510 comprising the common state generator 201, the image control unit 501, and the state control unit 502 can be software executed in a personal computer, a scalar in a display, a timing controller (T-CON), or firmware of a display unit, but the invention is not limited thereto.

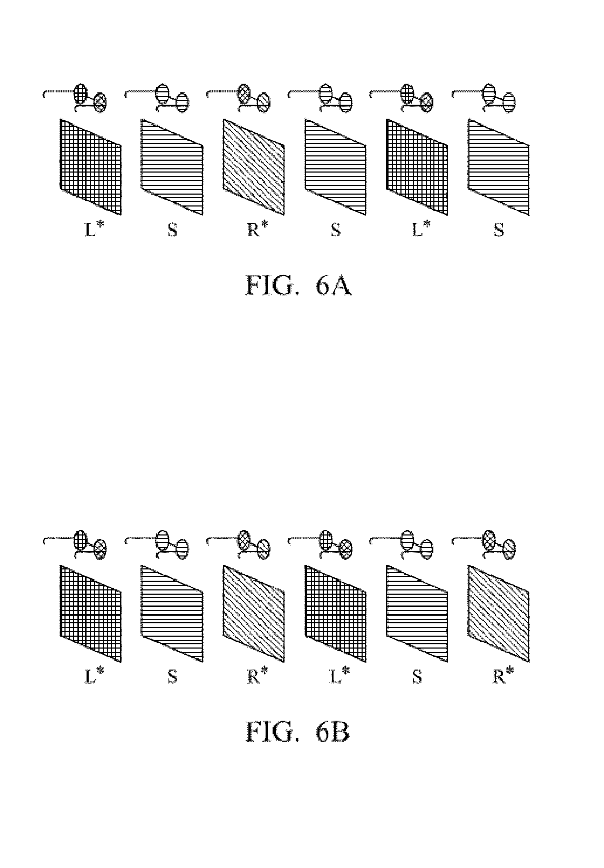

In an embodiment, as illustrated in FIG. 6A, the display frequency of the left-eye image and the right-eye image is 60Hz (i.e. in NTSC format). When the active shutter glasses is used, the predetermined display order displayed by the stereoscopic image display apparatus 500 can be L*→S→R*→S. That is, a common sub-image is inserted into the original display order after each left-eye image and each right-eye image, where the display frequency of the stereoscopic image display apparatus 500 is 240Hz in NTSC format and 200Hz in PAL format, respectively, in order to display the output stereoscopic images with twice the amount of data simultaneously. In another embodiment, as illustrated in FIG. 6B, the predetermined display order displayed by the stereoscopic image display apparatus can be L*→S→R*. That is, a common sub-image is inserted into the original display order after a left-eye image and before a subsequent right-eye image, where the display frequency of the stereoscopic image display apparatus 500 is 180Hz in an NTSC format and 150Hz in a PAL format, respectively, in order to display the output stereoscopic image with 1.5 times the amount of data simultaneously. In the aforementioned embodiments, the operation of the shutter glasses is to close the right-eye glass and close the left-eye glass for state 1 and state 2, respectively. However, for the images in state 3, the shutter glasses may have a condition of "both eyeglass lenses activated". That is, the left eyeglass lens and the right eyeglass lens are activated simultaneously to observe the common sub-image by two eyes, thereby increasing image quality.

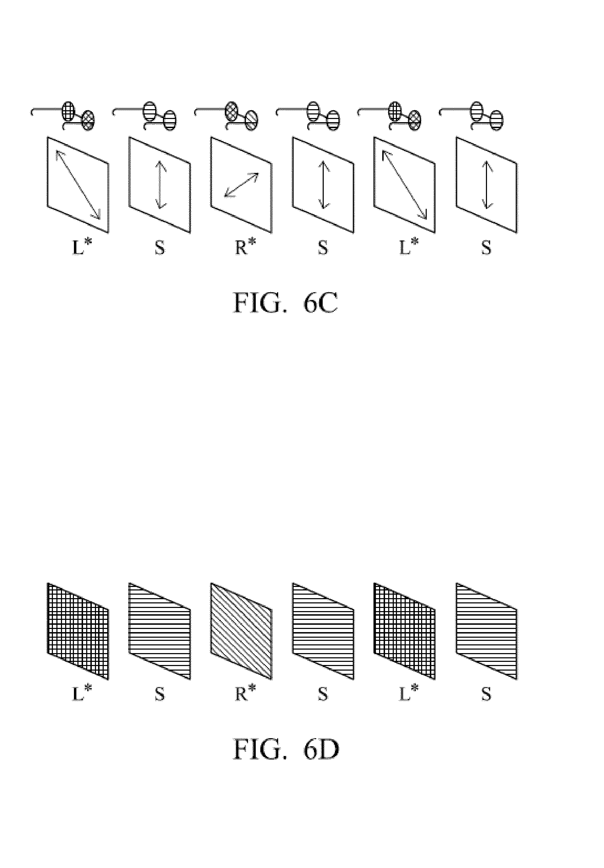

In yet another embodiment, as illustrated in FIG. 6C, the predetermined display order of the active light control layer 530 of the stereoscopic image display apparatus 500 may be L*→S→R*→S, or L*→S→R*, wherein the active light control layer 530 is at state 1, state 2 and state 3 according to the corresponding state signal of the left-eye image, the right-eye image and the common sub-image. The active light control layer 530 can be an active light polarizer, an active lens, or an active light directional layer. In another embodiment, when the active light polarizer is used with a pair of polarization glasses (i.e. comprising a left eyeglass lens and a right eyeglass lens), the predetermined display order of the stereoscopic image display apparatus can be L*→S→R*→S, or L*→S→R*. The stereoscopic image display apparatus 500 comprises a state control unit 502 to control the active polarizer. When receiving the state signal indicating state 3, the state control unit 502 may adjust the active polarizer to an intermediate angle between the left-eye image and the right-eye to output image signals. In the meantime, the common sub-images in state 3 can be observed by both eyeglass lenses of the polarization glasses.

In yet another embodiment, as illustrated in FIG. 6D, when naked-eye stereoscopic image technologies (e.g. parallax barriers), active lenses, or direct backlight is used in the stereoscopic image display apparatus 500, the left-eye image (e.g. state 1) and the right-eye image (e.g. state 2) are at their original operation modes, and the common sub-image in state 3 is applied in the two-dimensional mode of the naked-eye stereoscopic image display apparatus. Specifically, for the naked-eye three-dimensional display using parallax barriers, the state control unit 502 can be regarded as the controller of the parallax barriers. When receiving the state signal indicating state 3, the state control unit 502 will control the parallax barriers to switch to the two-dimensional viewing mode and output signals for viewing in the two-dimensional mode. In another embodiment, for the naked-eye three-dimensional display, the state control unit 502 can be regarded as the controller of the active lenses. When receiving the state signal indicating state 1, the state control unit 502 will adjust the angle of lenses, so that the light can pass through the active lenses in state 1 to the left eye (i.e. only the left-eye images are displayed). When receiving the state signal indicating state 2, the state control unit 502 will adjust the angle of lenses, so that the light can pass through the active lenses in state 1 to the right eye (i.e. only the right-eye images are displayed). When receiving the state signal indicating state 3, the state control unit 502 will adjust the angle of the lenses, so that the light can pass through the active lenses to both the left eye and the right eye simultaneously (i.e. both the left-eye image and the right-eye image are displayed), so that the naked-eye stereoscopic image display apparatus can switch to the two-dimensional viewing mode and output signals for viewing in the two-dimensional mode. In yet another embodiment, for the naked-eye three-dimensional display using direct backlight modules, the state control unit 502 can be regarded as the controller of the direct backlight module (i.e. active light directing layer). When receiving the state signals indicating state 1 and 2, the state control unit 502 will activate the left backlight sub-module and the right backlight sub-module in the direct backlight module, so that the left-eye image and the right-eye image can be received by the two eyes, respectively, when it is in the three-dimensional mode of the direct backlight module. When receiving the state signal indicating state 3, the state control unit 502 will control the left backlight sub-module and the right backlight sub-module in the direct backlight module to open simultaneously, so that the naked-eye stereoscopic image display apparatus can switch to the two-dimensional viewing mode and output signals for the two-dimensional mode, and thus the left-eye image and the right-eye image can be received by the two eyes simultaneously. The aforementioned embodiments are various applications of the stereoscopic image display apparatus, and the invention is not limited thereto.

The state signal indicating state 3 for the common sub-image should be collocated with a corresponding stereoscopic image display apparatus. Display technologies such as LCD, plasma, or OLED can be used in the stereoscopic image display apparatus. An LCD display may be collocated with an active polarizer, and the display, which does not use polarization, should be collocated with back polarization sheets. The active polarizer in the three-dimensional LCD display is a liquid crystal rotation layer, and a phase delay unit and a polarizer are placed on the opposite sides of the active polarizer separately, as illustrated in FIG. 1. The active polarizer in the invention is designed so that the pure left-eye image and the pure right-eye image can only be observed by the left eye and the right eye, respectively, and the common sub-image or the identical left-eye/right-eye images can be observed by both two eyes. The phase delay unit is designed for delaying linear polarization to circular polarization to improve the viewing angle of the stereoscopic image display apparatus for the user. The back polarizer is designed to prevent the light leakage which may cause the crosstalk of the image signals of the left-eye/right-eye images. Also, the design of the active polarizer should be collocated with the original polarization property of the display panel and the stereoscopic glasses. The stereoscopic glasses with circular polarization or linear polarization are prior technologies, and details will not be described here. In another embodiment, the parallax barriers, active lenses, the direct backlight module, or the active polarizer can be generally regarded as an "active light control layer", which control light by various ways to display the left-eye image on the left eye, display the right-eye image on the right eye, and display the common sub-image on the two eyes to accomplish stereoscopic visual effects.

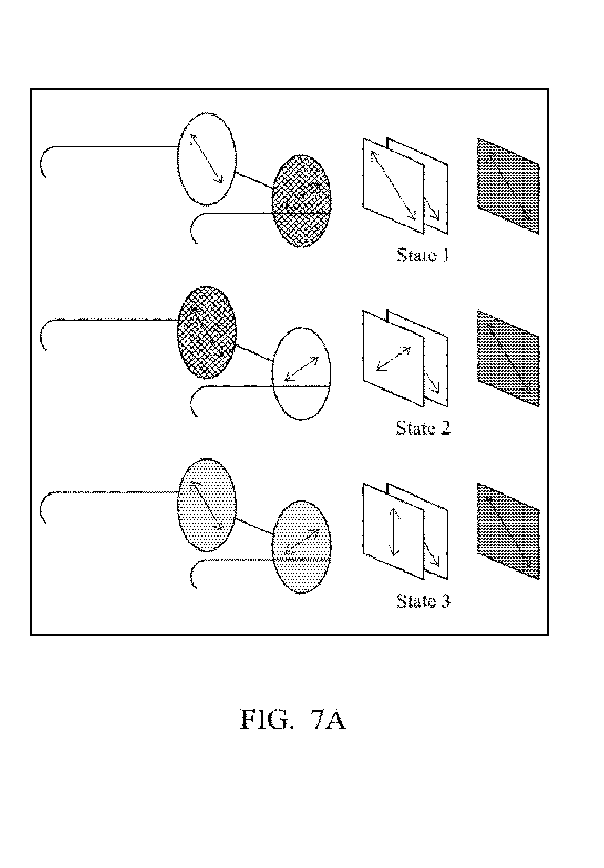

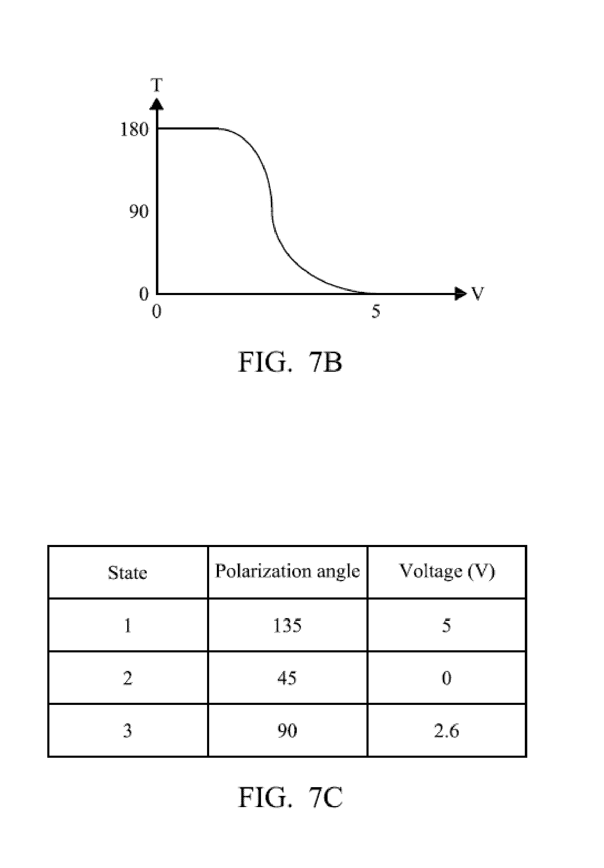

In an embodiment, the active polarizer adjusts the polarization angles based on the voltage signal. A conventional active polarizer merely has state 1 and state 2 for the left-eye image and the right-eye image, respectively, such as being polarized for 45 degrees or 135 degrees. The active polarizer in the invention has state 3 for the common sub-images. As illustrated in FIG. 7A, the three-dimensional glasses using linear polarization is collocated with the stereoscopic image display apparatus comprising the active polarizer, and thus it can be realized that the active polarizer is polarized at 90 degrees at state 3, so that the common sub-image can be observed by both two eyes simultaneously. The relationship between the polarization angle and the voltage of the active polarizer is illustrated in FIG 7B and 7C. When the voltage (V) is 5 volts, the polarization angle (T) of the active polarizer is 135 degrees, which corresponds to state 1 for the left-eye image. When the voltage (V) is 0 volt, the polarization angle (T) of the active polarizer is 45 degrees, which corresponds to state 2 for the right-eye image. When the voltage (V) is 2.6 volts, the polarization angle (T) of the active polarizer is 90 degrees, which corresponds to state 3 for the common sub-image. In summary, the active polarizer can use three different structures to compose the active polarized stereoscopic image display apparatus, wherein the first structure is merely a liquid crystal unit to alternate the direction of polarization, and the second structure is equipped with a front phase delay unit, and the third structure is equipped with a back polarization unit (i.e. generally with LCD panels).

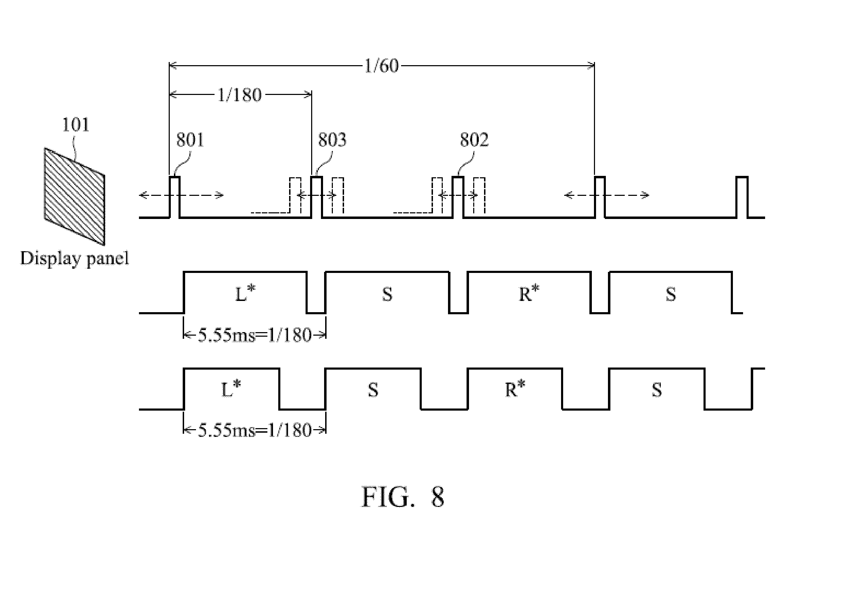

In an embodiment, taking LCD panels for example, the driving order for different states in the active polarizer of the invention should be identical to that of the LCD panel, so that the images observed by the user can be controlled correctly. On the other hand, the update frequency (i.e. frame rate) of the active polarizer of the invention should also be the same with that of the LCD panel. Referring to FIG. 8, the state signals 801, 802 and 803 are the control signals for state 1, 2 and 3, respectively. The state signals 801, 802 and 803 are used for adjusting the active polarizer to polarize to the corresponding angle in respect to state 1, 2, and 3 (e.g. 45, 135 and 90 degrees). However, the duration to achieve stabilized images may vary for different images. The time intervals between the state signals 801, 802 and 803 can be inconsistent (i.e. described later), and the state delay unit 503 (described later) can make consistent durations for the LCD panel to display stabilized images. Therefore, the time intervals between the state signals 801, 802 and 803 can be decreased or increased upon need.

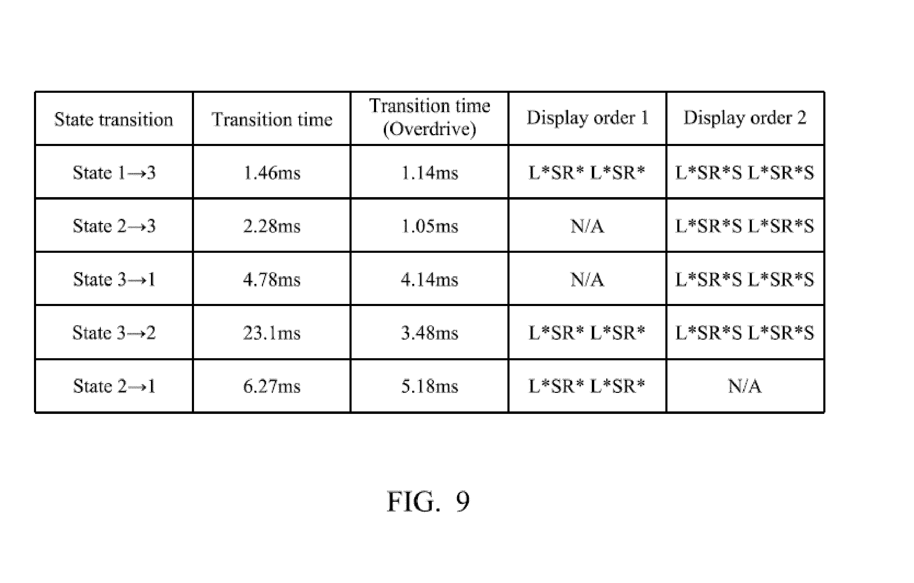

When incorporating the state signal indicating state 3 to the active light control layer (e.g. the active polarizer, active lenses, or the active light directing layer) or the LCD panel, it should be realized that different transition times of different states may cause inconsistent stereoscopic visual effects. Currently, there are prior technologies to solve the aforementioned issue partially, such as using the overdrive method on the LCD panel, extending the hold time or interpolating sub-frames, wherein extending the hold time indicates increment or decrement of the vertical blanking interval (VBI), the horizontal blanking interval (HBI) and the active time. FIG. 8 illustrates the required transition time between different states in an LCD TN Normal White panel, wherein states 1, 2, 3 correspond to luminance value 255, 0 and 128, respectively. Referring to FIG. 9, it can be realized that the transition time between different states can be significantly reduced, wherein when the predetermined display order 1 is L*→S→R*→L*→S→R*, there is no transition procedure from state 2 to state 3, and from state 3 to state 1. When the predetermined display order 2 is L*→S→R*→S→L*→S, there is no transition procedure from state to state 1.

In an embodiment, the stereoscopic image display apparatus of the invention displays images with the predetermined display order $L^* \to S \to R^* \to L^* \to S \to R^*$ (i.e. displaying images at 180Hz), and the state signal 803 indicates the default transmitting time of the state signal for state 3 at a fixed time interval. Due to the transition time between state switching, the state signal of the active light control layer should be received prior to that of the LCD panel. If the stereoscopic image display apparatus of the invention displays images with the predetermined display order $L^* \to S \to R^* \to S \to L^* \to S$, it indicates that the stereoscopic image display apparatus displays images at 240Hz. For example, if the stereoscopic image display apparatus equipped with OLED or plasma with the active polarizer is used, the active polarizer should be polarized to a specific position before the corresponding pixel emits, and be polarized to a next specific position after the corresponding pixel finishes emissions. The update frequency of the panel of the stereoscopic image display apparatus can be larger than or equal to the update frequency of the active polarizer. In another embodiment, if the panel of the stereoscopic image display apparatus is divided into one or more display sub-regions, all the display sub-regions or each display sub-region can be updated upon updating the control signals.

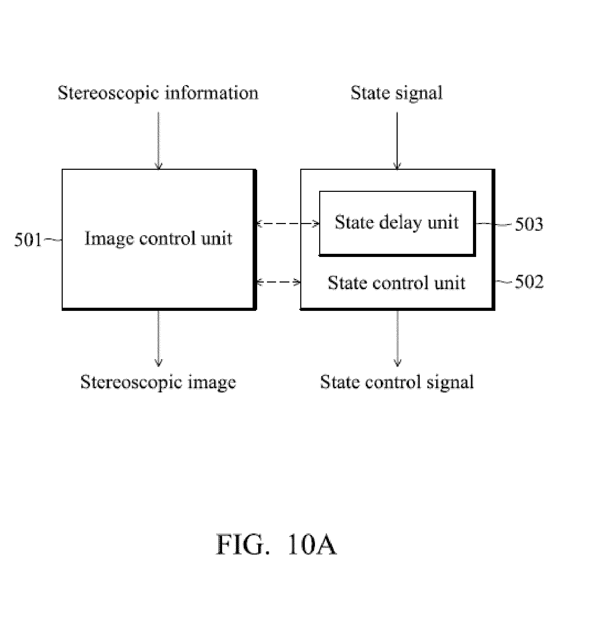

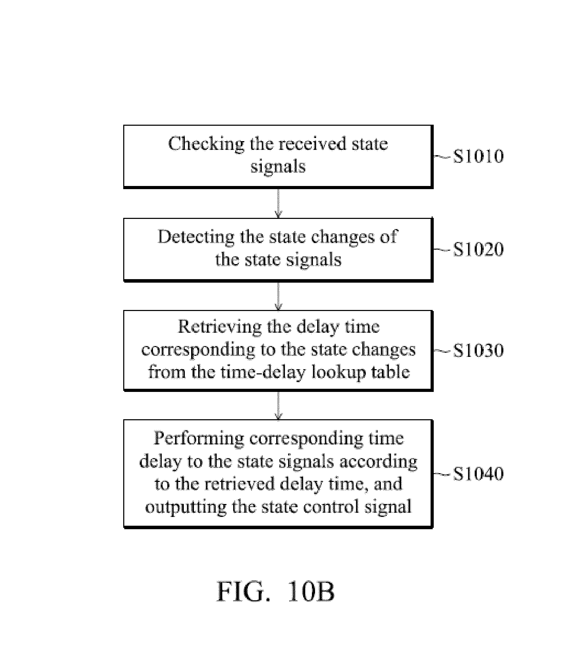

In yet another embodiment, as illustrated in FIG. 10A, the state control unit 502 of the invention may further comprise a state delay unit 503, which comprises a time-delay lookup table to record image transition property of the active light control layer and the display panel corresponding to switching between different images. The state delay unit can perform corresponding time delay to the state signals according to the transition time and the states, so that the active light control layer and the display panel can display the corresponding images simultaneously and precisely. The procedure executed by the state delay unit 503 is illustrated in FIG. 10B. In step S1010, the state delay unit 503 may check the state signals received. In step S1020, the state delay unit 503 may detect the state changes of the state signals. In step S1030, the state delay unit 503 may read the delay time corresponding to the state changes from the time-delay lookup table. In step S1040, the state delay unit 503 may perform corresponding time delay to the state signals according the delay time retrieved from the time-delay lookup table, and output the state control signal, wherein the state control signal is a corrected state signal. In an embodiment, the active light control layer, which can be an active polarizer, an active lens, or an active light directing layer, may be adjusted by the time delay method or timing correction method, so that the left-eye image, the right-eye image, and the common sub-image corresponding to the state signals indicating state 1, 2, 3 can be precisely matched with the timing of the display panel to output images correctly.

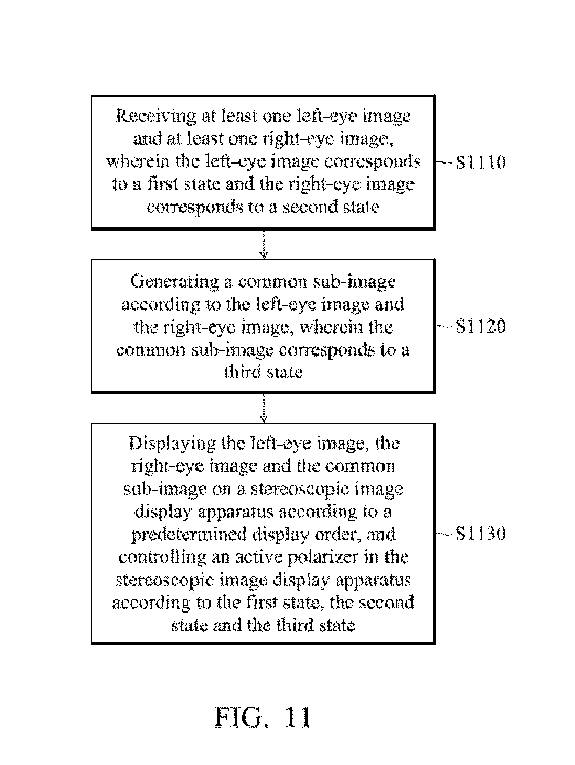

FIG. 11 illustrates a flow chart of the stereoscopic image display method according to an embodiment of the invention. In step S1110, the common state generator 201 may receive at least one left-eye image and at least one right-eye image, wherein the left-eye image may correspond to a first state, and the right-eye image may correspond to a second state. In step S1120, the common state generator 201 may generate a common sub-image according to the left-eye image and the right-eye image, wherein the common sub-image may correspond to a third state. In step S1130, the image control unit 503 may display the left-eye image, the right-eye image, and the common sub-image on a stereoscopic image display apparatus with a predetermined display order, and the state control unit 502 may control the active light control layer in the stereoscopic image display apparatus according to the first state, the second state, and the third state, wherein the active light control layer may stay at the state 1, the state 2 and the state 3 corresponding to the left-eye image, the right-eye image, and the common sub-image, respectively. If the active light control layer is an active polarizer, the active polarizer may control a polarization angle corresponding to the left-eye image, the right-eye image, and the common sub-image. In the embodiment, the active polarizer may have a first polarization angle corresponding to the left-eye image, and have a second polarization angle corresponding to the right-eye image. When the stereoscopic image display apparatus 500 displays the common sub-image, the polarization angle of the active polarizer is between the first polarization angle and the second polarization angle. If the active light control layer is an active lens, only the left-eye image and the right-eye image can pass through the active lens at the first state and the second state, respectively. In addition, the left-eye image and the right-eye image can pass through the active lens simultaneously at the third state.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

**Claims**

1. A stereoscopic image display apparatus, comprising a common state generator, arranged for receiving stereoscopic information and generating a left-eye image, a right-eye image, a common sub-image, and a corresponding state signal, wherein the common sub-image is a common part of the left-eye image and the right-eye image;
a display panel, arranged for displaying the left-eye image, the right-eye image and the common sub-image according to a predetermined display order;

and

an active light control layer, wherein the active light control layer is at a first state, a second state, and a third state, respectively, according to the state signal when the display panel displays the left-eye image, the right-eye image, and the common sub-image, respectively.

2. The stereoscopic image display apparatus as claimed in claim 1, wherein the predetermined display order is the left-eye image, the common sub-image, the right-eye image, and then the common sub-image, or the predetermined display order is the left-eye image, the common sub-image, and then the right-eye image.

3. The stereoscopic image display apparatus as claimed in claim 1, further comprising:

a pair of polarization glasses, comprising a left eyeglass lens and a right eyeglass lens, wherein when the display panel displays the left-eye image, the left-eye image with the first polarization angle can only be observed by the left eyeglass lens;

wherein when the display panel displays the right-eye image, the right-eye image with the second polarization angle can only be observed by the right eyeglass lens; and when the display panel displays the common sub-image, the common sub-image can be observed by both the left eyeglass lens and the right eyeglass lens.

4. The stereoscopic image display apparatus as claimed in claim 1, wherein the active light control layer is an active polarizer, which has a first polarization angle, a second polarization angle, and a third polarization angle, wherein the third polarization angle is between the first polarization angle and the second polarization angle.

5. The stereoscopic image display apparatus as claimed in claim 4, further comprising:

a state delay unit, arranged for adjusting a delay time of the state signal according to an image transition property corresponding to the left-eye image, the right-eye image and the common sub-image, so that corresponding transition time of the active polarizer matches the display time of the display panel displaying the left-eye image, the right-eye image and the common sub-image;

wherein the state delay unit further comprises a time-delay lookup table to record the transition time of the state signal for switching between the left-eye image, the right-eye image and the common sub-image in the active layer and the display panel.

6. The stereoscopic image display apparatus as claimed in claim 1, wherein the active light control layer is an active light directing layer comprising a left backlight module and a right backlight module; and the active light directing layer activates the left backlight module and the right backlight module at the first state and the second state, respectively, and activates both the left backlight module and the right backlight module simultaneously at the third state.

7. The stereoscopic image display apparatus as claimed in claim 1, wherein the active light control layer is an active lens, which adjusts only the left-eye image to be displayed by passing through the active lens at the first state, and adjusts only the right-eye image to be displayed by passing through the active lens at the second state, and adjusts both the left-eye image and the right-eye image to be displayed simultaneously by passing through the active lens at the third state.

8. The stereoscopic image display apparatus as claimed in claim 1, wherein the common state generator further applies a first image profile to the left-eye image and the right-eye image, and applies a second image profile to the common sub-image.

9. A stereoscopic image display method, comprising:

receiving stereoscopic information, and generating a left-eye image, a right-eye image and a common sub-image according to the stereoscopic information, wherein the left-eye image, the right-eye image and the common sub-image have a corresponding state signal indicating a first state, a second state and a third state, respectively, and the common sub-image is a common part of the left-eye image and the right-eye image;

displaying the left-eye image, the right-eye image, and the common sub-image on a display panel of a stereoscopic image display apparatus according to a predetermined display order; and adjusting an active light control layer in the stereoscopic image display apparatus according to the state signal.

10. The stereoscopic image display method as claimed in claim 9, wherein the predetermined display order is the left-eye image, the common sub-image, the right-eye image, and then the common sub-image; or the predetermined display order is the left-eye image, the common sub-image, and then the right-eye image.

**11.** The stereoscopic image display method as claimed in claim 9, wherein the stereoscopic image display apparatus further comprises a pair of polarization glasses comprising a left eyeglass lens and a right eyeglass lens, and the method further comprises:

adjusting the left eyeglass lens to the first polarization angle to observe the left-eye image when the display panel displays the left-eye image;
adjusting the right eyeglass lens to the second polarization angle to observe the right-eye image when the display panel displays the right-eye image; and
adjusting both the left eyeglass lens and the right eyeglass lens to observe the left-eye image and the right-eye image simultaneously when the display panel displays the common sub-image.

**12.** The stereoscopic image display method as claimed in claim 9, wherein the active light control layer is an active polarizer, and the method further comprises:

adjusting the active polarizer to a first polarization angle, a second polarization angle, and a third polarization angle, wherein the third polarization angle is between the first polarization angle and the second polarization angle.

**13.** The stereoscopic image display method as claimed in claim 9, wherein the active light control layer is an active light directing layer comprising a left backlight module and a right backlight module, and the method further comprises:

adjusting the active light directing layer to merely activate the left backlight module at the first state;
adjusting the active light directing layer to merely activate the right backlight module at the second state; and
adjusting the active light directing layer to activate both the left backlight module and the right backlight module simultaneously at the third state.

**14.** The stereoscopic image display method as claimed in claim 9, wherein the active light control layer is an active lens, and the method further comprises:

adjusting only the left-eye image to be displayed by passing through the active lens at the first state;
adjusting only the right-eye image to be displayed by passing through the active lens at the second state; and
adjusting both the left-eye image and the right-eye image to be displayed simultaneously by passing through the active lens.

**15.** The stereoscopic image display method as claimed in claim 9, further comprising:

applying a first image profile to the left-eye image and the right-eye image; and
applying a second image profile to the common sub-image.

FIG. 1

Stereoscopic information

Common state generator ~ 201

Stereoscopic          State
image               signal

FIG. 2A

Left-eye
image

Right-eye
image

Common state generator —201

Yes

No

The same?

State 3

State 1/2

FIG. 2B

FIG. 2C

FIG. 3A

303　　　304　　　305

L　　　R　　　L　　　R　　　L　　　R

State 3　State 3
State 1　State 2

State 3
State 1

State 3
State 2

State 3
State 1

State 3
State 2

FIG. 3B

FIG. 3C

FIG. 3D

```
┌───────┐                    ┌───────┐
│ 111   │                    │       │
│ 131   │ ─────────────────> │   1   │
│ 311   │                    │       │
└───────┘                    └───────┘
```

FIG. 3E

```
┌───────┐                    ┌───────┐
│ 333   │                    │       │
│ 131   │ ─────────────────> │   3   │
│ 311   │                    │       │
└───────┘                    └───────┘
```

FIG. 3F

```
┌─────────┐                    ┌─────────┐
│  333    │                    │         │
│  111    │  ············▶     │    1    │
│  311    │                    │         │
└─────────┘                    └─────────┘
```

FIG. 3G

```
┌─────────┐                    ┌─────────┐
│  333    │                    │         │
│  133    │  ············▶     │    1    │
│  333    │                    │         │
└─────────┘                    └─────────┘
```

FIG. 3H

FIG. 4A

FIG. 4B

FIG. 4C

500

Stereoscopic information

Display timing
controller                                    ~510

Common state generator                         ~201

Stereoscopic
image                          State signal

501~   Image control            State control   ~502
        unit                      unit

Stereoscopic                   State control
image                          signal

520~   Display panel           Active light      ~530
                                control layer

FIG. 5

FIG. 6A

L*  S  R*  S  L*  S

FIG. 6B

L*  S  R*  L*  S  R*

FIG. 6C

FIG. 6D

FIG. 7A

FIG. 7B

| State | Polarization angle | Voltage (V) |
|---|---|---|
| 1 | 135 | 5 |
| 2 | 45 | 0 |
| 3 | 90 | 2.6 |

FIG. 7C

FIG. 8

EP 2 541 499 A2

| State transition | Transition time | Transition time (Overdrive) | Display order 1 | Display order 2 |
|---|---|---|---|---|
| State 1→3 | 1.46ms | 1.14ms | L*SR* L*SR* | L*SR*S L*SR*S |
| State 2→3 | 2.28ms | 1.05ms | N/A | L*SR*S L*SR*S |
| State 3→1 | 4.78ms | 4.14ms | N/A | L*SR*S L*SR*S |
| State 3→2 | 23.1ms | 3.48ms | L*SR* L*SR* | L*SR*S L*SR*S |
| State 2→1 | 6.27ms | 5.18ms | L*SR* L*SR* | N/A |

FIG. 9

EP 2 541 499 A2

Stereoscopic information                     State signal

501 —    Image control unit        ⟵ — — ⟶    State delay unit        — 503

                                   ⟵ — — ⟶    State control unit       ~ 502

Stereoscopic image                           State control signal

FIG. 10A

Checking the received state signals — S1010

Detecting the state changes of the state signals — S1020

Retrieving the delay time corresponding to the state changes from the time-delay lookup table — S1030

Performing corresponding time delay to the state signals according to the retrieved delay time, and outputting the state control signal — S1040

FIG. 10B

Receiving at least one left-eye image
and at least one right-eye image,
wherein the left-eye image corresponds
to a first state and the right-eye image
corresponds to a second state

—S1110

Generating a common sub-image
according to the left-eye image and
the right-eye image, wherein the
common sub-image corresponds to a
third state

—S1120

Displaying the left-eye image, the
right-eye image and the common
sub-image on a stereoscopic image
display apparatus according to a
predetermined display order, and
controlling an active polarizer in the
stereoscopic image display apparatus
according to the first state, the second
state and the third state

—S1130

FIG. 11

**EP 2 541 499 A2**

**REFERENCES CITED IN THE DESCRIPTION**

**Patent documents cited in the description**

- TW 100123007